# EUROPEAN PATENT APPLICATION

(11) **EP 2 541 985 A1**
(43) Date of publication of application: **02.01.2013**
(21) Application number: 11746852.0
(22) Date of filing: 24.02.2011
(51) Int. Cl.: H04W 36/08, H04W 88/12

(54) **INTER-SYSTEM HANDOVER METHOD AND DEVICE FOR TERMINAL**

(30) Priority: 24.02.2010 CN 201010119430
(71) Applicant: ZTE Corporation, Shenzhen, Guangdong 518057 (CN)
(72) Inventor: SHA, Xiubin, Shenzhen Guangdong 518057 (CN); DOU, Jianwu, Shenzhen Guangdong 518057 (CN); KE, Yazhu, Shenzhen Guangdong 518057 (CN)
(74) Representative: Hutchinson, Glenn Stanley
(86) International application number: PCT/CN2011/071280
(87) International publication number: WO 2011/103810

(57) **Abstract**

The present invention discloses an inter-system handover method and apparatus for a terminal, wherein the method includes: a terminal sending, to a dual radio access technology (RAT) radio network controller (RNC), a radio measurement report request message of handing over from a first cell to a second cell, wherein both the first cell and the second cell belong to the dual RAT RNC and a radio access technology of the first cell is different from a radio access technology of the second cell; the dual RAT RNC informing the second cell to allocate radio resources for the terminal; and the dual RAT RNC informing, after the allocation of the radio resources is completed, the terminal to hand over to the second cell. The present invention is capable of shortening inter-system handover time delay and improving inter-system handover performance.

## Description

### Field of the Invention

The present invention relates to the communication field, in particular to an inter-system handover method and apparatus for a terminal.

### Background of the Invention

In a radio communication network, a main approach to improve network performance and save network establishment costs is to operate different radio access technologies (RATs) at the same time. This is especially the case when an operator who already possesses a 2G network is establishing a 3G network, the 3G network relies on the coverage of the 2G network and the 2G network relies on the high data rate of a packet service and so on provided by the 3G network to improve the network performance, and dual network complementation is the first problem which needs to be taken into account during network establishment.

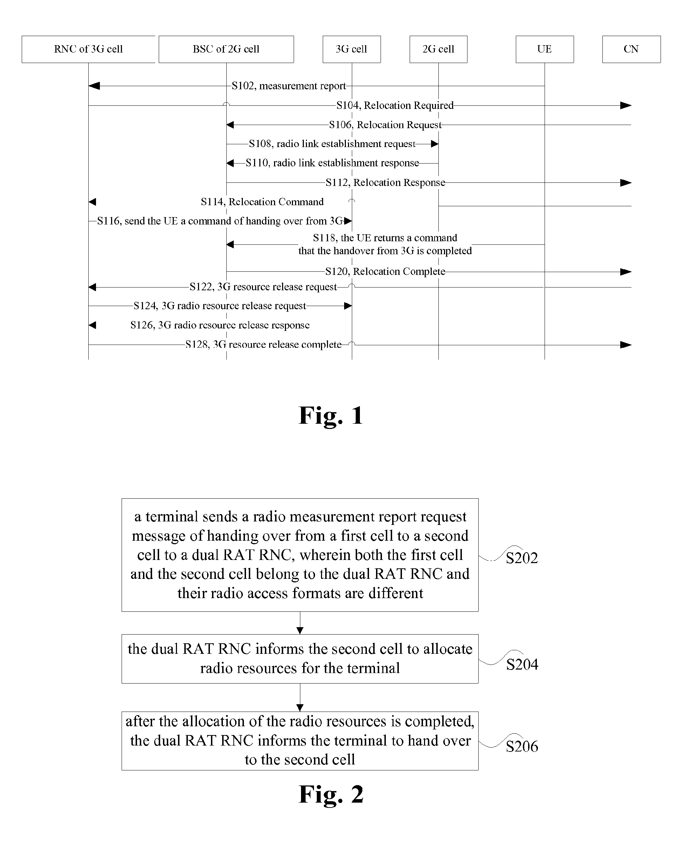

In order to achieve the network complementation of different radio access technologies, handover of services between the networks of different radio access technologies is a basic function. Currently, those network systems which use different access technologies each have a set of network equipment, for example, the 3G and 2G networks have their own RNCs, RNCs (radio network controllers) of 3G cells and BSCs (base station controllers) of 2G cells, to manage their own cells (3G cells and 2G cells). Therefore, as shown in Fig. 1, taking a terminal of a 3G cell handing over to a 2G cell for example, a conventional inter-system handover procedure includes the following steps:
Step S102: a UE sends a radio measurement report message to a radio network controller of a 3G cell to request to hand over to a 3G cell;
Step S104: the radio network controller of the 3G cell sends a relocation required message (Relocation Required) to a core network (CN);
Step S106: the CN sends a relocation request message (Relocation Request) to a base station controller of a 2G cell;
Step S108: the base station controller of the 2G cell sends a radio link establishment request message to the 2G cell, and the 2G cell allocates radio resources for the UE;
Step S110: the 2G cell sends a radio link establishment response message to the base station controller of the 2G cell, and the 2G radio resources are already prepared;
Step S 112: the base station controller of the 2G cell sends a relocation response message (Relocation Response) to the CN;
Step S 114: the CN sends a relocation command message (Relocation Command) to the radio network controller of the 3G cell;
Step S 116: the radio network controller of the 3G cell sends the UE a command of handing over from the 3G network;
Step S 118: the UE sends a radio network controller of the 2G cell a command that the handover from the 3G network is completed;
Step S120: the radio network controller of the 2G cell sends a relocation complete message (Relocation Complete) to the CN;
Step S122: the CN sends a 3G resource release request message to the radio network controller of the 3G cell;
Step S124: the radio network controller of the 3G cell sends a resource release request message to the 3G cell;
Step S126: the 3G cell sends a resource release response message to the radio network controller of the 3G cell; and
Step S128: the radio network controller of the 3G cell sends a 3G resource release complete message to the CN, and the handover is completed.

Since the target system is informed by an inter-system relocation message to prepare the radio resources and the inter-system handover procedure is initiated only after the target system returns a relocation response message, the handover time delay is relatively long. As to a UE (user equipment) which moves at a high speed, the handover with long time delay is easy to cause call drops and affect handover performance and QoS (quality of service) of services.

### 3Summary of the Invention

The present invention provides an inter-system handover method and apparatus for a terminal so as to at least solve the above problems.

According to one aspect of the present invention, an inter-system handover method for a terminal is provided, and the method includes: a terminal sending, to a dual radio access technology (RAT) radio network controller (RNC), a radio measurement report request message of handing over from a first cell to a second cell, wherein both the first cell and the second cell belong to the dual RAT RNC and a radio access technology of the first cell is different from a radio access technology of the second cell; the dual RAT RNC informing the second cell to allocate radio resources for the terminal; and the dual RAT RNC informing, after the allocation of the radio resources is completed, the terminal to hand over to the second cell.

Preferably, after the dual RAT RNC informs the terminal to hand over to the second cell, the method further includes: the dual RAT RNC informing the first cell to release radio resources of the terminal.

Preferably, after the dual RAT RNC informs the terminal to hand over to the second cell, the method further includes: the dual RAT RNC carrying out a handover operation of a radio access technology of a user plane.

In the above, both the first cell and the second cell belong to the same core network, and Iu interface coding modes of radio access technologies of the first cell and the second cell are the same.

Preferably, when the first cell and the second cell belong to different core networks or Iu interface coding modes of radio access technologies of the first cell and the second cell are different, after the dual RAT RNC informs the terminal to hand over to the second cell, the method further includes: the dual RAT RNC informing a first core network to which the first cell belongs to carry out enhanced relocation; and the first core network informing a second core network to which the second cell belongs to carry out enhanced relocation.

Preferably, the first cell is a 3G cell and the second cell is a 2G cell; or, the first cell is a 2G cell and the second cell is a 3G cell.

Preferably, the dual RAT RNC supports at least two kinds of radio access technologies.

According to another aspect of the present invention, an inter-system handover apparatus is provided, and the apparatus includes: a module of the first radio access technology, configured to receive a radio measurement report request message of requesting to hand over from a first cell to a second cell sent by a terminal, wherein both the first cell and the second cell belong to a dual RAT RNC and a first radio access technology of the first cell is different from a second radio access technology of the second cell; and further configured to inform the terminal to hand over to the second cell after allocation of radio resources for the terminal by the second cell is completed; and a module of the second radio access technology, configured to inform the second cell to allocate the radio resources for the terminal.

Preferably, the module of the first radio access technology and the module of the second radio access technology communicate via an internal user-defined software interface.

Preferably, the module of the first radio access technology is further configured to inform the first cell to release radio resources of the terminal; and also configured to inform the module of the second radio access technology to complete handover of a radio access technology of a user plane after the handover of the terminal is completed; and the module of the second radio access technology is further configured to send data to the terminal by using a coding mode of the second radio access technology.

In the present invention, due to using a dual RAT RNC (also referred to s dual-mode RNC), when a terminal hands over from a cell of one radio access technology under the dual RAT RNC to a cell of another radio access technology under this RNC, the handover decision is made by the same RNC, therefore, the allocation of radio resources of the target radio access system does not need to be informed to the target radio access system by using inter-system relocation messages, and the dual RAT RNC can allocate resources in the target radio access system while making the handover decision, thus the inter-system handover time delay can be shortened and inter-system handover performance can be improved.

### Brief Description of the Accompanying Drawings

The drawings illustrated here provide a further understanding of the present invention and form a part of the present application. The exemplary embodiments and the description thereof are used to explain the present invention without unduly limiting the scope of the present invention In the drawings:
Fig. 1 is a schematic diagram of the inter-system handover procedure of a terminal according to the related art;
Fig. 2 is a flow chart of an inter-system handover method for a terminal according to an embodiment of the present invention;
Fig. 3 is a particular architecture diagram of a dual RAT RNC according to an embodiment of the present invention;
Fig. 4 is a schematic diagram of the handover procedure from a 2G cell to a 3G cell under the same dual RAT RNC without any relocation message according to embodiment 1 of the present invention;
Fig. 5 is a schematic diagram of the handover procedure from a 3G cell to a 2G cell under the same dual RAT RNC without any relocation message according to embodiment 2 of the present invention;
Fig. 6 is a schematic diagram of the handover procedure from a 2G cell to a 3G cell under the same dual RAT RNC with a relocation message according to embodiment 3 of the present invention;
Fig. 7 is a schematic diagram of the handover procedure from a 3G cell to a 2G cell under the same dual RAT RNC with a relocation message according to embodiment 4 of the present invention;
Fig. 8 is a schematic diagram of the handover procedure from a 3G cell to a 2G cell between RNCs according to embodiment 5 of the present invention;
Fig. 9 is a schematic diagram of the handover procedure from a 2G cell to a 3G cell between RNCs according to embodiment 6 of the present invention;
Fig. 10 is a structural schematic diagram of an inter-system handover apparatus for a terminal according to an embodiment of the present invention;
Fig. 11 is an architecture diagram of a network system that a 3G cell and a 2G cell share the same core network according to an embodiment of the present invention; and
Fig. 12 is an architecture diagram of a network system that a 3G cell and a 2G cell do not share the same core network according to an embodiment of the present invention.

### Detailed Description of Embodiments

The present invention will be described hereinafter in detail with reference to the accompanying drawings and in conjunction with embodiments. It needs to note that the embodiments of the present application and the features in the embodiments can be combined with each other if there is no conflict.

Fig. 2 is a flow chart of an inter-system handover method for a terminal according to an embodiment of the present invention, and as shown in Fig. 2, the method includes the following steps:
Step S202: a terminal sends, to a dual RAT RNC, a radio measurement report request message of handing over from a first cell to a second cell, wherein both the first cell and the second cell belong to the dual RAT RNC and their radio access technologies are different;
Step S204: the dual RAT RNC informs the second cell to allocate radio resources for the terminal; and
Step S206: after the allocation of the radio resources is completed, the dual RAT RNC informs the terminal to hand over to the second cell.

In this embodiment, due to using a dual RAT RNC (also referred to s dual-mode RNC), when a terminal hands over from a cell of one radio access technology under the dual RAT RNC to a cell of another radio access technology under this RNC, the handover decision is made by the same RNC, therefore, the allocation of radio resources of the target radio access system does not need to be informed to the target radio access system by using inter-system relocation messages, and the dual RAT RNC can allocate resources in the target radio access system while making the handover decision, thus the inter-system handover time delay can be shortened and inter-system handover performance can be improved.

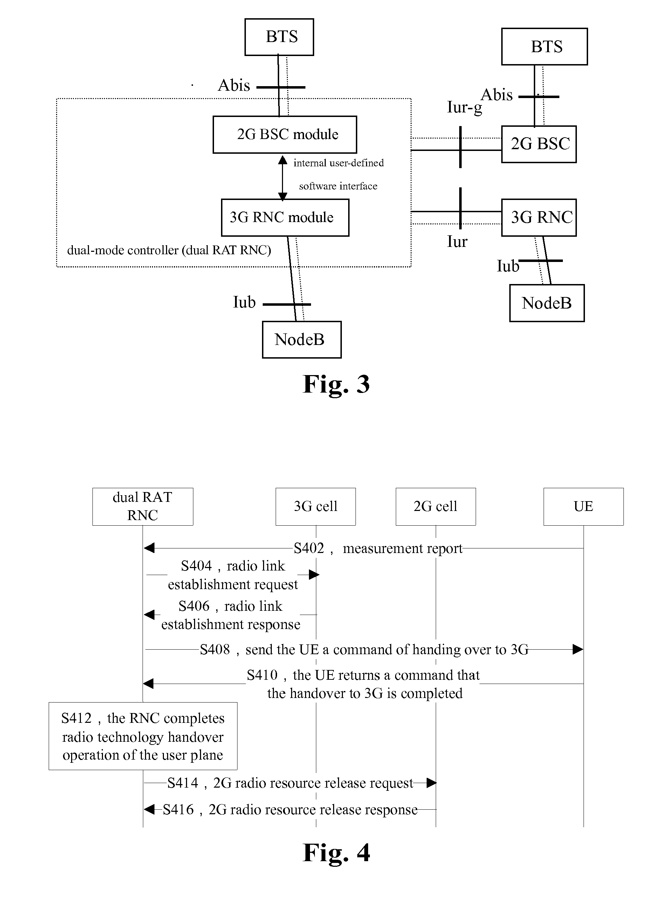

The dual RAT RNC is able to support two or more radio access technologies by integrating the radio network controllers of two or more radio access technologies into the same RNC, so as to achieve hardware multiplexing of different radio access technologies and save research and development costs and network establishment costs. The dual RAT RNC, according to network element configuration relationship, can independently serve one radio access technology therein and can also serve two radio access technologies simultaneously. When the radio access technology of the first cell is a first radio access technology and the radio access technology of the second cell is a second radio access technology, and the first radio access technology and the second radio access technology are respectively 3G and 2G or 2G and 3G, the frame of the dual RAT RNC is as shown in Fig. 3.

As shown in Fig. 3, the dual RAT RNC includes a 2G BSC module and a 3G RNC module, in which when one certain module is configured to bear 2G radio access technology, this module is the 2G BSC module; and when one certain module is configured to bear 3G radio access technology, this module is the 3G BSC module. The 2G BSC module and 3G RNC module are connected via an internal user-defined software interface and carry out interaction between a 2G protocol command and 3G protocol command via this internal user-defined software interface. The 2G BSC module can directly establish a wireless connection with a BTS via a standard interface of a protocol, and the 3G RNC module can directly establish a wireless connection with a NodeB via a standard interface of a protocol; and the dual RAT RNC can also be connected to a 2G BSC and a 3G RNC via standard interfaces of protocols. When a terminal requests to hand over between a 2G cell and a 3G cell both of which belong to the same dual RAT RNC, the target cell to which the terminal is to be handed over is informed, through the communication between the 2G BSC module and 3G RNC module in this dual RAT RNC, to allocate radio resources, and after the handover of the terminal is completed (i.e. the terminal returns a handover complete command), the handover of radio access technology of user plane is completed by the 2G BSC module and 3G RNC module carrying out inter-module changeover.

In the above, after step S206, the method further includes: the dual RAT RNC informs the first cell to release radio resources of the terminal. Thus, the first cell can allocate the radio resources to other terminals to use and so on.

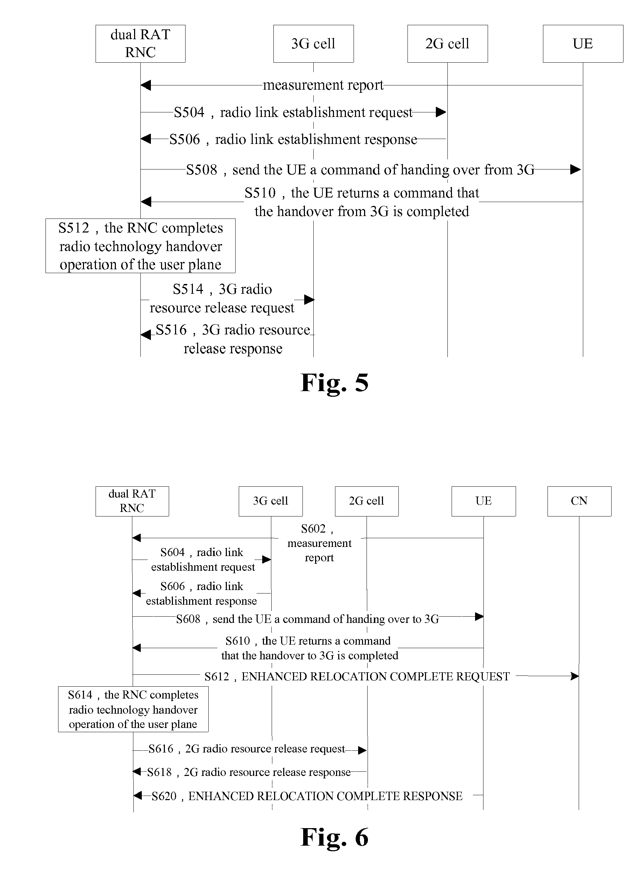

After step S206, the method further includes: the dual RAT RNC carries out a handover operation of radio access technology of user plane. Specifically, as shown in Figs. 3 and 5, in the case that the terminal requests to hand over from a 3G cell to a 2G cell, after the terminal returns a command that the handover from 3G is completed, the dual RAT RNC converts the coding mode of the data sent to the terminal from 3G coding mode to 2G coding mode, i.e. inter-module changeover happens between the 3G RNC module and the 2G BSC module, and the 2G BSC module sends data to the terminal by way of 2G coding mode. Likewise, the case that the terminal requests to hand over from the 2G cell to the 3G cell is similar to the above procedure, which will not be described here unnecessarily

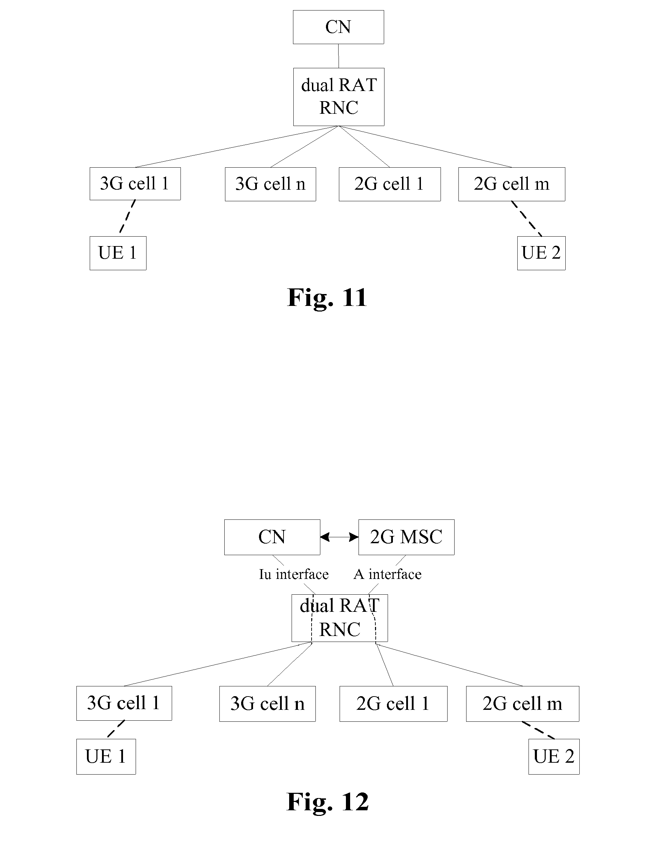

In the above, the first cell and the second cell belong to the same core network and the Iu interface coding modes of the radio access technologies of the first cell and the second cell are the same. As to cells with different technologies managed by the same dual RAT RNC, if the cells with two technologies share the same core network (CN) and the Iu interface coding modes of these two technologies are the same, then inter-system handover does not need any inter-system relocation message. As shown in Fig. 11, it is an architecture diagram of a network system when the first cell (such as 3G cell 1) and the second cell (such as 2G cell m) share the same CN.

In addition, when the first cell and the second cell belong to different core networks or the Iu interface coding modes of the radio access technologies of the first cell and the second cell are different, after step S206, the method further includes: the dual RAT RNC informs a first core network to which the first cell belongs to carry out enhanced relocation; and then the first core network informs a second core network to which the second cell belongs to carry out enhanced relocation. In this case, as to cells with different technologies managed by the same dual RAT RNC, if two cells do not share the same CN or the Iu interface coding modes of the two technologies are different, then it is required to inform the CN to carry out radio technology handover through Iu interface enhanced relocation. As shown in Fig. 12, it is an architecture diagram of a network system when the first cell (such as 3G cell 1) and the second cell (such as 2G cell m) do not share the same CN. The CN is informed to carry out enhanced relocation so that the CN can update relevant information of the terminal, such as routing information and so on.

In the above method, the first cell can be a 3G cell and the second cell can be a 2G cell; or, the first cell can be a 2G cell and the second cell can be a 3G cell. That is, the dual RAT RNC can support two radio access technologies of 3G and 2G simultaneously

In the above, the dual RAT RNC supports two kinds of radio access technologies. Likewise, it can further support more than two kinds of radio access technologies.

As to the handover of cells with different radio access technologies between dual RAT RNCs, it is required to initiate inter-system handover through conventional inter-system relocation.

Fig. 4 is a schematic diagram of the handover procedure from a 2G cell to a 3G cell under the same dual RAT RNC without any relocation message according to embodiment 1 of the present invention, and as shown in Fig. 4, the procedure includes the following steps:
Step S402: a UE sends a radio measurement report message to a dual RAT RNC to request to hand over to a 3G cell;
Step S404: the dual RAT RNC sends a radio link establishment request message to the 3G cell, and the 3G cell allocates radio resources for the UE;
Step S406: the 3G cell sends a radio link establishment response message to the dual RAT RNC, and the 3G radio resources have been prepared;
Step S408: the dual RAT RNC sends the UE a command of handing over to the 3G network;
Step S410: the UE sends the dual RAT RNC a command that the handover to the 3G network is completed;
Step S412: the dual RAT RNC internally completes the radio technology handover operation of a user plane;
Step S414: the dual RAT RNC sends a resource release request message to a 2G cell; and
Step 5416: the 2G cell sends a resource release response message to the dual RAT RNC, and the handover is completed.

Fig. 5 is a schematic diagram of the handover procedure from a 3G cell to a 2G cell under the same dual RAT RNC without any relocation message according to embodiment 2 of the present invention, and the procedure includes the following steps:
Step S502: a UE sends a radio measurement report message to a dual RAT RNC to request to hand over to a 2G cell;
Step S504: the dual RAT RNC sends a radio link establishment request message to the 2G cell, and the 2G cell allocates radio resources for the UE;
Step S506: the 2G cell sends a radio link establishment response message to the dual RAT RNC, and the 2G radio resources have been prepared;
Step S508: the dual RAT RNC sends the UE a command of handing over from the 3G network;
Step S510: the UE sends the dual RAT RNC a command that the handover from the 3G network is completed;
Step S512: the dual RAT RNC internally completes the radio technology handover operation of a user plane;
Step S514: the dual RAT RNC sends a resource release request message to the 3G cell; and
Step S516: the 3G cell sends a resource release response message to the dual RAT RNC, and the handover is completed.

Fig. 6 is a schematic diagram of the handover procedure from a 2G cell to a 3G cell under the same dual RAT RNC with a relocation message according to embodiment 3 of the present invention, and the procedure includes the following steps:
Step S602: a UE sends a radio measurement report message to a dual RAT RNC to request to hand over to a 3G cell;
Step S604: the dual RAT RNC sends a radio link establishment request message to the 3G cell, and the 3G cell allocates radio resources for the UE;
Step S606: the 3G cell sends a radio link establishment response message to the dual RAT RNC, and the 3G radio resources have been prepared;
Step S608: the dual RAT RNC sends the UE a command of handing over to the 3G network;
Step S610: the UE sends the dual RAT RNC a command that the handover to the 3G network is completed;
Step 5612: the dual RAT RNC sends an enhanced relocation complete request message (ENHANCED RELOCATION COMPLETE REQUEST) to a CN;
Step S614: the dual RAT RNC internally completes the radio technology handover operation of a user plane;
Step S616: the dual RAT RNC sends a resource release request message to a 2G cell;
Step S618: the 2G cell sends a resource release response message to the dual RAT RNC; and
Step S620: the CN sends an enhanced relocation complete response message (ENHANCED RELOCATION COMPLETE RESPONSE) to the dual RAT RNC; and the handover is completed.

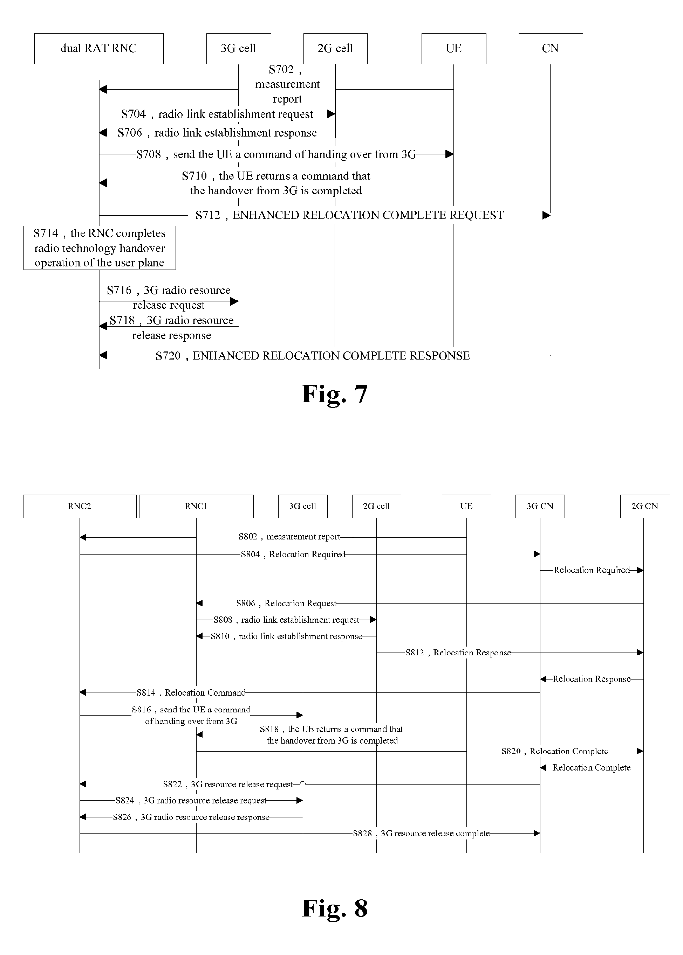

Fig. 7 is a schematic diagram of the handover procedure from a 3G cell to a 2G cell under the same dual RAT RNC with a relocation message according to embodiment 4 of the present invention, and as shown in Fig. 7, the procedure includes the following steps:
Step S702: a UE sends a radio measurement report message to a dual RAT RNC to request to hand over to a 2G cell;
Step S704: the dual RAT RNC sends a radio link establishment request message to a 2G cell, and the 2G cell allocates radio resources for the UE;
Step S706: the 2G cell sends a radio link establishment response message to the dual RAT RNC, and the 2G radio resources have been prepared;
Step S708: the dual RAT RNC sends the UE a command of handing over from the 3G network;
Step S710: the UE sends the dual RAT RNC a command that the handover from the 3G network is completed;
Step S712: the dual RAT RNC sends an enhanced relocation complete request message (ENHANCED RELOCATION COMPLETE REQUEST) to a CN;
Step S714: the dual RAT RNC internally completes the radio technology handover operation of a user plane;
Step S716: the dual RAT RNC sends a resource release request message to a 3G cell;
Step S718: the 3G cell sends a resource release response message to the dual RAT RNC; and
Step S720: the CN sends an enhanced relocation complete response message (ENHANCED RELOCATION COMPLETE RESPONCE) to the dual RAT RNC; and the handover is completed.

Fig. 8 is a schematic diagram of the handover procedure from a 3G cell to a 2G cell between RNCs according to embodiment 5 of the present invention (the 3G cell and 2G cell do not share the same CN), and as shown in Fig. 8, the procedure includes the following steps:
Step S802: a UE sends a radio measurement report message to an RNC2 to request to hand over to a 2G cell.
Step S804: the RNC2 sends a relocation required message (Relocation Required) to a CN.

Specifically, the RNC2 sends a relocation required message to a 3G CN, the 3G CN forwards this relocation required message to a 2G CN, i.e. the signaling of RNC2→RNC1 is first delivered to the CN of 3G and then delivered to 2G CN by the CN of 3G, vice versa, the signaling of RNC1→ RNC2 is first delivered to the CN of 2G and then delivered to 3G CN by the CN of 2G
Step S806: the CN sends a relocation request message (Relocation Request) to an RNC1.
Specifically, the 2G CN sends a relocation request message to the RNC1.
Step 5808: the RNC1 sends a radio link establishment request message to a 3G cell, and the 2G cell allocates radio resources for the UE.
Step S810: the 2G cell sends a radio link establishment response message to the RNC1, and the 2G radio resources have been prepared.
Step S812: the RNC1 sends a relocation response message (Relocation Response) to the CN.

Specifically, the RNC1 sends a relocation response message to the 2G CN, and the 2G CN forwards this relocation response message to the 3G CN.
Step S814: the CN sends a relocation command message (Relocation Command) to the RNC2.

Specifically, the 3G CN sends a relocation command message to the RNC2.
Step S816: the RNC2 sends the UE a command of handing over from the 3G network.
Step S818: the UE sends the RNC1 a command that the handover from the 3G network is completed.
Step S820: the RNC1 sends a relocation complete message (Relocation Complete) to the CN.

Specifically, the RNC 1 sends a relocation complete message to the 2G CN, and the 2G CN forwards this relocation complete message to the 3G CN.
Step S822: the CN sends a 3G resource release request message to the RNC2.

Specifically, the 3G CN sends the 3G resource release request message to the RNC2.
Step S824: the RNC2 sends a resource release request message to the 3G cell.
Step S826: the 3G cell sends a resource release response message to the RNC2.
Step S828: the RNC2 sends a 3G resource release complete message to the CN, and the handover is completed.

Specifically, the RNC2 sends a 3G resource release complete message to the 3G CN.

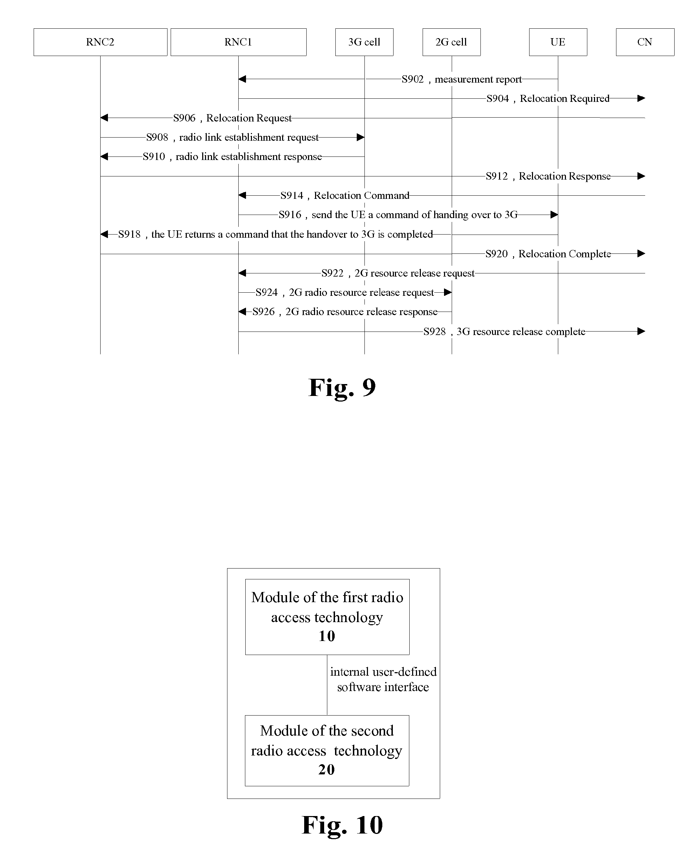

Fig. 9 is a schematic diagram of the handover procedure from a 2G cell to a 3G cell between RNCs according to embodiment 6 of the present invention (the 3G cell and the 2G cell share the same CN), and as shown in Fig. 9, the procedure includes the following steps:
Step S902: a UE sends a radio measurement report message to an RNC1 to request to hand over to a 3G cell;
Step S904: the RNC1 sends a relocation required message (Relocation Required) to a CN;
Step S906: the CN sends a relocation request message (Relocation Request) to an RNC2;
Step S908: the RNC2 sends a radio link establishment request message to the 3G cell, and the 3G cell allocates radio resources for the UE;
Step S910: the 3G cell sends a radio link establishment response message to the RNC2, and the 3G radio resources have been prepared;
Step S912: the RNC2 sends a relocation response message (Relocation Response) to the CN;
Step S914: the CN sends a relocation command message (Relocation Command) to the RNC 1;
Step S916: the RNC1 sends the UE a command of handing over to the 3G network;
Step S918: the UE sends the RNC2 a command that the handover to the 3G network is completed;
Step S920: the RNC2 sends a relocation complete message (Relocation Complete) to the CN;
Step S922: the CN sends a 2G resource release request message to the RNC1;
Step S924: the RNC1 sends a resource release request message to the 2G cell;
Step S926: the 2G cell sends a resource release response message to the RNC1; and
Step S928: the RNC1 sends a 2G resource release complete message to the CN, and the handover is completed.

In the above, the RNC1 and the RNC2 in Figs. 8 and 9 can be conventional RNCs and can also be dual RAT RNCs.

Fig. 10 is a schematic diagram of the structure of an inter-system handover apparatus (i.e. dual RAT RNC) for a terminal according to an embodiment of the present invention, and as shown in Fig. 10, it includes:
a module 10 of the first radio access technology which is configured to receive a radio measurement report request message of requesting to hand over from a first cell to a second cell sent by a terminal, wherein both the first cell and the second cell belong to a dual RAT RNC and a first radio access technology of the first cell is different from a second radio access technology of the second cell; and is further configured to inform the terminal to hand over to the second cell after the allocation of radio resources to the terminal by the second cell is completed; and
a module 20 of the second radio access technology which is configured to inform the second cell to allocate the radio resources for the terminal.

In the above, the module 10 of the first radio access technology and the module 20 of the second radio access technology communicate via an internal user-defined software interface.

In the above, the module 10 of the first radio access technology is further configured to inform the first cell to release radio resources of the terminal; and also configured to inform the module 20 of the second radio access technology to complete the handover of a radio access technology of a user plane (i.e. changing over from the module of the first radio access technology to the module of the second radio access technology to carry out the handover of the radio access technology of the use plane) after the handover of the terminal is completed; and
the module 20 of the second radio access technology is further configured to send data to the terminal by using a coding mode of the second radio access technology.

When the first radio access technology and second radio access technology are respectively 3G and 2G or 2G and 3G, the specific frame diagram of this dual RAT RNC is as shown in Fig. 3.

The architecture diagram of the network system is as shown in Figs. 11 and 12 and it relates to the following five network elements: dual RAT radio network controller (abbreviated as dual RAT RNC hereinafter), 3G cell, 2G cell, CN and UE. Wherein, the dual RAT RNC can support 3G and 2G radio access technologies simultaneously, and these two radio access technologies can interact information with each other to complete the resource allocation notification of the target radio access technology of inter-system handover and shorten handover time delay; and the cooperation of 3G cell, 2G cell, CN, UE and dual RAT RNC can complete inter-system handover quickly.

The CN has a function of enhanced relocation, after having received an enhanced relocation complete request message, inter-system relocation of a CN domain is carried out, and an enhanced relocation complete response message is sent to the dual RAT RNC after the relocation is completed (if the CN finds that the target RNC and the source RNC in the enhanced relocation complete request message are the same RNC, it does not need to initiate an Iu interface resource release request).

Network elements of 3G cell, 2G cell, and UE do not relate to any modifications and have the properties and functions of conventional network elements.

It can be seen from the above description that the present invention achieves the following technical effects: due to using a dual RAT RNC (also referred to s dual-mode RNC), when a terminal hands over from a cell of one radio access technology under the dual RAT RNC to a cell of another radio access technology under this RNC, the handover decision is made by the same RNC, therefore, the allocation of radio resources of the target radio access system does not need to be informed to the target radio access system by using inter-system relocation messages, and the dual RAT RNC can allocate resources in the target radio access system while making the handover decision, thus the inter-system handover time delay can be shortened and inter-system handover performance can be improved.

Apparently, those skilled in the art shall understand that the above modules and steps of the present invention can be realized by using general purpose calculating device, can be integrated in one calculating device or distributed on a network which consists of a plurality of calculating devices, and alternatively they can be realized by using the executable program code of the calculating device, so that consequently they can be stored in the storing device and executed by the calculating device, in some cases, can perform the shown or described step in sequence other than herein, or they are made into integrated circuit module respectively, or a plurality of modules or steps thereof are made into one integrated circuit module. In this way, the present invention is not restricted to any particular hardware and software combination.

Above description is only to illustrate the preferred embodiments but not to limit the present invention. Various alterations and changes to the present invention are apparent to those skilled in the art. The scope defined in Claims shall comprise any modification, equivalent substitution and improvement within the spirit and principle of the present invention.

## Claims

1. An inter-system handover method for a terminal, comprising:
a terminal sending, to a dual radio access technology (RAT) radio network controller (RNC), a radio measurement report request message of handing over from a first cell to a second cell, wherein both the first cell and the second cell belong to the dual RAT RNC and a radio access technology of the first cell is different from a radio access technology of the second cell;
the dual RAT RNC informing the second cell to allocate radio resources for the terminal; and
the dual RAT RNC informing, after the allocation of the radio resources is completed, the terminal to hand over to the second cell.

2. The method according to Claim 1, wherein after the dual RAT RNC informs the terminal to hand over to the second cell, the method further comprises:
the dual RAT RNC informing the first cell to release radio resources of the terminal.

3. The method according to Claim 2, wherein after the dual RAT RNC informs the terminal to hand over to the second cell, the method further comprises:
the dual RAT RNC carrying out a handover operation of a radio access technology of a user plane.

4. The method according to any one of Claims 1-3, wherein both the first cell and the second cell belong to the same core network, and Iu interface coding modes of radio access technologies of the first cell and the second cell are the same.

5. The method according to any one of Claims 1-3, wherein when the first cell and the second cell belong to different core networks or Iu interface coding modes of radio access technologies of the first cell and the second cell are different, after the dual RAT RNC informs the terminal to hand over to the second cell, the method further comprises:
the dual RAT RNC informing a first core network to which the first cell belongs to carry out enhanced relocation; and
the first core network informing a second core network to which the second cell belongs to carry out enhanced relocation.

6. The method according to Claim 1, wherein the first cell is a 3G cell and the second cell is a 2G cell; or, the first cell is a 2G cell and the second cell is a 3G cell.

7. The method according to Claim 1, wherein the dual RAT RNC supports at least two kinds of radio access technologies.

8. An inter-system handover apparatus for a terminal, comprising:
a module of a first radio access technology, configured to receive a radio measurement report request message of requesting to hand over from a first cell to a second cell sent by a terminal, wherein both the first cell and the second cell belong to a dual RAT RNC and a first radio access technology of the first cell is different from a second radio access technology of the second cell; and further configured to inform the terminal to hand over to the second cell after allocation of radio resources for the terminal by the second cell is completed; and
a module of a second radio access technology, configured to inform the second cell to allocate the radio resources for the terminal.

9. The apparatus according to Claim 8, wherein the module of the first radio access technology and the module of the second radio access technology communicate via an internal user-defined software interface.

10. The apparatus according to Claim 8, wherein
the module of the first radio access technology is further configured to inform the first cell to release radio resources of the terminal; and also configured to inform the module of the second radio access technology to complete handover of a radio access technology of a user plane after the handover of the terminal is completed; and
the module of the second radio access technology is further configured to send data to the terminal by using a coding mode of the second radio access technology.
